# FASCICULE DE BREVET EUROPEEN

(11) **EP 1 371 207 B1**
(45) Date de publication et mention de la délivrance du brevet: **09.04.2008**
(21) Numéro de dépôt: 02703684.7
(22) Date de dépôt: 08.02.2002
(51) Int. Cl.: H04L 29/06

(54) **DISPOSITIF PORTABLE POUR SECURISER LE TRAFIC DE PAQUETS DANS UNE PLATE-FORME HOTE**
TRAGBARES GERÄT ZUM SICHERN DES PAKETENVERKEHRS IN EINEM WIRTSYSTEM
PORTABLE DEVICE FOR SECURING PACKET TRAFFIC IN A HOST PLATFORM

(30) Priorité: 14.03.2001 FR 0103648
(43) Date de publication de la demande: 17.12.2003
(73) Titulaire: GEMPLUS, 13420 Gémenos (FR)
(72) Inventeur: LAMOTTE, Thierry, 71250 Salornay-Sur-Guye (FR)
(86) Numéro de dépôt international: PCT/FR2002/000494
(87) Numéro de publication internationale: WO 2002/073930

(56) Documents cités:
- US-A- 6 067 620
- US-A- 6 141 752

## Description

La présente invention concerne d'une manière générale la sécurité de paquets transmis dans des réseaux de paquets tels que le réseau internet.

Plus particulièrement elle concerne la sécurité de paquets IP transmis depuis et reçus par une plate-forme hôte telle qu'un assistant numérique personnel, un radiotéléphone mobile, un ordinateur portable, etc., ainsi que la mobilité d'informations de sécurité agissant sur le trafic des paquets et liées à un usager utilisant la plate-forme hôte.

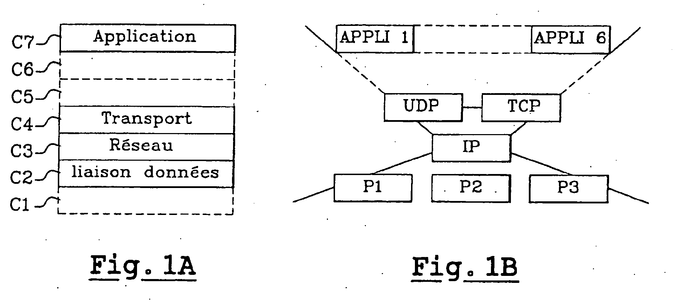

Actuellement, la sécurité entre deux plate-formes communiquant l'une avec l'autre à travers un réseau de télécommunications quelconque est implémentée dans certaines couches protocolaires du modèle d'interconnexion des systèmes ouverts OSI (Open System Interconnection). Comme montré aux figures 1A et 1B, parmi les sept couches C1 à C7 du modèle OSI, l'une des couches C2, C3, C4 et C7 dans chacune des plate-formes implémente des moyens de sécurité.

S'agissant de la couche application C7, par exemple pour des applications APPLI1 à APPLI6 liant une carte à puce et un terminal d'accueil en tant que plate-forme hôte, tels qu'une carte de crédit et un terminal bancaire, ou bien tels qu'une carte de module d'identité d'abonné SIM (Subscriber Identity Module) et un terminal radiotéléphonique, les moyens de sécurité sont installés sur une application du terminal d'accueil, telle que l'application APPLI1. Une application particulière, par exemple un navigateur internet, par laquelle l'usager accède facilement à ses informations personnelles de sécurité, est ainsi sécurisée. La sécurité liée à une application n'est pas dépendante du matériel constituant le terminal d'accueil. Cependant, des moyens de sécurité doivent être dupliqués sur chacune des applications APPLI1 à APLLI6 mises en oeuvre dans le terminal. Cette solution n'offre pas de portabilité des informations liées à la sécurité de l'usager au-delà de l'application dans laquelle cette solution a été spécifiquement prévue.

S'agissant de la couche transport C4 permettant d'envoyer des messages d'une application à une autre application par exemple au moyen du protocole UDP (User Datagram Protocol) ou du protocole TCP (Transmission Control Protocol), des moyens de sécurité implémentés dans l'un TCP des protocoles de transport remédie avantageusement à la duplication des moyens de sécurité dans chacune des applications APPLI1 à APPLI6 qui toutes bénéficient alors de ces moyens de sécurité. Dans cette solution, les moyens de sécurité sont fortement attachés à la plate-forme et non pas à l'usager de celle-ci bien qu'il doit s'authentifier le plus souvent possible afin de pouvoir l'utiliser. Si un autre protocole de transport, tel que le protocole UDP, doit être sécurisé, il faut alors dupliquer les moyens de sécurité dans l'autre protocole de transport UDP de la même manière que dans le premier protocole TCP. Cette deuxième solution connue n'offre pas également la portabilité des informations liées à la sécurité de l'usager.

S'agissant de la couche réseau C3 occupée par exemple par le protocole internet IP, l'implémentation de moyens de sécurité dans cette couche a de nombreux avantages. Des moyens de sécurité étant traités en un seul point "entonnoir" de la pile des protocoles, la gestion des moyens de sécurité et des clés associées à ceux-ci est optimisée. Les logiciels implémentant des moyens de sécurité dans les couches supérieures C4 à C7 peuvent ainsi avantageusement ne pas implémenter de moyens de sécurité en se reposant sur la sécurité unique de la couche C3. Toutes les applications ainsi que les différents protocoles de transport bénéficient des moyens de sécurité de manière quasiment transparente. Cependant, de même que dans le cas de la couche C4, les moyens de sécurité sont fortement attachés à la plate-forme et non pas un usager. Dans la cas présent, ces moyens de sécurité "s'éloignent" encore plus de l'usager. Comme les autres solutions, cette troisième solution n'offre pas également la portabilité des informations liées à la sécurité de l'usager.

S'agissant de la couche liaison de données C2 dans laquelle sont implémentés trois protocoles P1, P2 et P3 par exemple, cette quatrième solution a pour désavantage d'être très liée à l'infrastructure matérielle et offre des moyens de sécurité bien moindres et moins souples que ceux offert dans la couche C3.

Les implémentations de moyens de sécurité dans les couches précitées C2, C3, C4 et C7 montrent que plus l'implémentation est réalisée dans une couche basse du modèle OSI, plus la sécurité globale est transparente et offerte pour toutes les applications de la plate-forme. En revanche, les moyens de sécurité sont profondément liés à la plate-forme et s'éloignent donc de l'usager relativement aux services personnalisés qui peuvent lui être fournis et à la certitude sur l'identité de l'usager qui utilise la plate-forme.

Actuellement, les applications utilisant deux principaux types de carte à puce, dite carte à microcontrôleur, en tant que dispositif portable électronique offrent une portabilité de paramètres de sécurité liés à un usager donné, les moyens de sécurité étant implémentés dans au moins une application de la couche application C7 du modèle OSI.

Dans un premier type de carte à puce relatif à une carte d'identité SIM (Subscriber Identity Module) amovible d'un terminal radiotéléphonique jouant le rôle de plate-forme hôte, des clés cryptographiques sont stockées dans la carte à puce. La carte à puce authentifie l'usager sans que les clés cryptographiques soient connues hors de la carte. Ainsi avantageusement, la carte à puce est intimement liée à son possesseur-usager et les données personnelles de sécurité de l'usager sont aisément portables d'une plate-forme à une autre. Ceci facilite aussi le déploiement de l'application.

Cependant, les commandes sont émises par l'application qui est implémentée à l'extérieur de la carte. Une clé dit clé de session est générée à l'intérieur de la carte. La clé de session est transmise par la carte à puce à l'extérieur de celle-ci, vers le terminal d'accueil qui utilise ultérieurement cette clé de session pour chiffrer la communication. Une fois cette clé de session fournie à l'extérieur de la carte, la carte n'a plus la maîtrise de l'utilisation de la clé notamment dans la durée. La carte à puce n'est donc pas en mesure d'assurer à l'usager une parfaite sécurité des données échangées vis-à-vis de l'utilisation qui sera faite ultérieurement de ses propres clés.

En outre, le terminal d'accueil extérieur à la carte doit embarquer du logiciel que contient la plus grande partie de l'application, la carte n'étant principalement utilisée ici que pour stocker des clés et assurer des calculs cryptographiques. Les aspects décisionnels de l'application sont localisés et réservés au terminal extérieur à la carte à puce, ce qui lui confère une responsabilité relativement limitée.

Pour une carte à puce du deuxième type connecté à la plate-forme hôte telle qu'un ordinateur personnel PC, la carte à puce est utilisée notamment dans des applications sécurisées de courrier électronique utilisant une signature électronique et un chiffrement de message de courrier électronique. Pour ce deuxième type, la carte à puce mémorise des clés cryptographiques publiques ainsi qu'une clé privée et un certificat intimement liés à l'usager possesseur de la carte et est utilisée pour ses calculs cryptographiques produisant des signatures de message. Les données personnelles de sécurité de l'usager dans la carte sont encore aisément portables d'une plate-forme à une autre. Le déploiement de l'infrastructure à clés publiques est ainsi facilité.

Chaque clé de session de chiffrement étant déchiffrée par la carte à puce et fournie à la plate-forme hôte, la confiance sur l'utilisation ultérieure des clés de chiffrement/déchiffrement fournies par la carte repose essentiellement sur la plate-forme hôte à laquelle la carte est connectée notamment lors de phases décisionnelles et de chiffrement de données. L'ordinateur extérieur à la carte doit encore embarquer le logiciel contenant la plus grande partie de l'application, la carte n'étant utilisée que pour contenir des clés et assurer des calculs cryptographiques. Les aspects décisionnels de l'application sont encore localisés et réservés à l'extérieur, c'est-à-dire à l'ordinateur extérieur à la carte à puce.

Pour les deux types précédents de carte à puce, une carte à puce est comparable à un coffre-fort portable qui peut être ouvert par la connaissance d'une combinaison, telle qu'une authentification de son porteur-usager par code d'identification PIN par exemple, qui permet une génération d'une nouvelle clé de session par la carte qui est ensuite fournie à la plate-forme hôte. La confiance repose alors en partie sur la plate-forme accueillant la carte à puce.

De plus, dans le contexte d'un grand nombre de terminaux offrant des connexions au réseau global, les deux types précédents de cartes à puce ne sont pas satisfaisants en termes d'interopérabilité à cause de la sécurité notamment implémentée au niveau applicatif et à cause des applications qui sont le plus souvent propriétaires.

Le domaine de la sécurité IPSec sur internet organisé par l'instance IETF définit une implémentation de moyens de sécurité au niveau de la couche réseau C3 du modèle OSI. Les commentaires RFC2401 "IPSec architecture" de l'instance IETF préconisent notamment une implémentation hôte qui peut être une implémentation "OS Integration" qui s'intègre avec le système d'exploitation de la plate-forme hôte, ou une implémentation "Bump-In-The-Stack" (BITS) qui s'intercale entre la couche réseau C3 et la couche liaison C2.

L'un des inconvénients majeurs de l'implémentation des moyens de sécurité IPSec réside dans le déploiement et la gestion de l'infrastructure à clés publiques qui est relativement complexe. En mettant en oeuvre la sécurité au niveau de la couche réseau C3, la notion de l'usager qui utilise la plate-forme est perdue, la couche réseau sécurisant un noeud de réseau mais pas l'usager particulier. Les paramètres de sécurité sont attachés à une plate-forme et ne sont pas portables vers une autre plate-forme. US6141752 divulgue une carte à puce qui mémorise des paramètres qui

permettent à un dispositif "client" d'obtenir un service d'un dispositif "serveur".

La présente invention a pour objectif de remédier aux inconvénients des systèmes de sécurité selon la technique antérieure précitée. Plus précisément, elle vise à fournir un dispositif portable de sécurité sécurisant le trafic dans une plate-forme tout en offrant une portabilité d'informations liées à la sécurité de l'usager, comme dans la carte à puce du deuxième type, mais de paramètres également liés au traitement des paquets, indépendamment des applications dans la plate-forme hôte, facilitant ainsi le déploiement de la gestion des clés.

A cette fin, un dispositif électronique portable connecté de manière amovible à une plate-forme hôte liée à un réseau de paquets, est caractérisé en ce qu'il comprend un moyen pour mémoriser des politiques de sécurité, un moyen pour détecter des paramètres de désignation de politique de sécurité dans des paquets sortant de la plate-forme vers le réseau et des paquets transmis par le réseau et entrant dans la plate-forme, et un moyen pour traiter les paquets sortants et entrants respectivement en fonction de politiques de sécurité désignées par les paramètres de désignation détectés.

Le dispositif électronique portable de l'invention, telle qu'une carte à puce, non seulement contient des données de sécurité et effectue des calculs cryptographiques, mais inclut un moyen décisionnel pour traiter tous les paquets sortant et entrant dans la plate-forme hôte, c'est-à-dire pour filtrer les paquets en fonction de politiques de sécurité respectives. De préférence, le moyen pour traiter les paquets peut comprendre un moyen pour chiffrer et/ou encapsuler avec un en-tête d'authentification et/ou un en-tête de confidentialité un paquet sortant en fonction de la politique de sécurité désignée par au moins un paramètre de désignation inclus dans le paquet sortant, et/ou un moyen pour déchiffrer et/ou désencapsuler relativement à un en-tête d'authentification et/ou un en-tête de confidentialité un paquet entrant en fonction de la politique de sécurité désignée par au moins un paramètre de désignation inclus dans le paquet entrant.

La sécurité est ainsi améliorée, puisqu'aucune donnée ou paramètre de sécurité n'est inclus ou utilisé par la plate-forme hôte.

Toutes les données personnelles de l'usager-possesseur du dispositif portable ainsi que tous les moyens de sécurité nécessaires au traitement instantané des paquets résident dans le dispositif de l'invention qui, grâce à la portabilité du dispositif, suivent facilement l'usager.

Pour ne pas complexifier le dispositif portable par une gestion importante des politiques de sécurité et laisser avantageusement la charge de cette gestion à l'administrateur-distributeur des dispositifs portables, l'invention recommande de confier la gestion des politiques à un serveur de gestion distant et ainsi de gérer dynamiquement les politiques de sécurité sur l'initiative du dispositif portable au cours de communications de paquets.

A cet égard, le dispositif portable peut comprendre un moyen pour initier une communication avec un serveur de gestion de politique de sécurité à travers le réseau, lorsque le moyen pour traiter ne reconnaît aucune politique de sécurité en correspondance avec les paramètres de désignation de politique détectés dans un paquet afin que le serveur négocie une politique de sécurité à travers le dispositif et transmette au dispositif au moins un paquet contenant des paramètres de désignation et des paramètres dont dépend la politique négociée et qui sont mémorisés et utilisés dans le dispositif pour traiter les paquets relatifs à la politique négociée.

D'autres caractéristiques et avantages de la présente invention apparaîtront plus clairement à la lecture de la description suivante de plusieurs réalisations préférées de l'invention en référence aux dessins annexés correspondants dans lesquels :
- les figures 1A et 1B déjà commentés montrent respectivement les sept couches protocolaires du modèle OSI et les quatre couches de celles-ci impliquées dans une implémentation de moyens de sécurité selon la technique antérieure ; et
- la figure 2 est un bloc-diagramme d'un système de sécurité à plate-forme hôte et dispositif électronique portable selon l'invention.

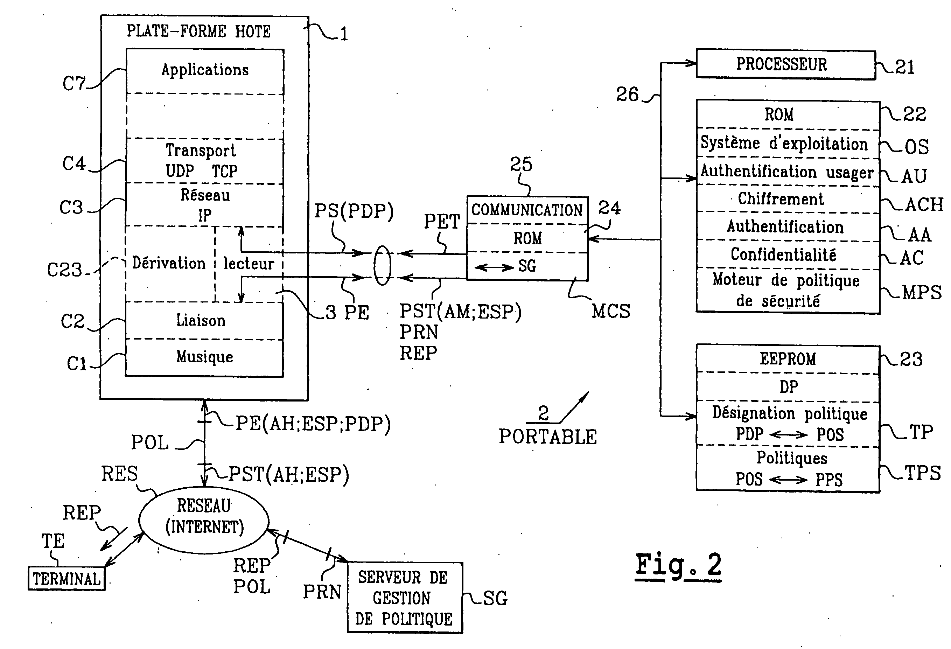

En référence à la figure 2, un système de sécurité comprend une plate-forme hôte 1 telle qu'un assistant numérique personnel PDA, et un dispositif électronique portable 2 selon l'invention sous la forme d'une carte à puce, dite carte à microcontrôleur ou carte à circuit intégré.

Selon d'autres variantes de l'invention, la plate-forme hôte 1 peut être un ordinateur personnel PC notamment portable, un radiotéléphone mobile, un terminal internet utilisé en borne publique, ou bien encore un terminal internet implanté dans des objets personnels électroniques tels, que consoles de jeux vidéo, véhicules, récepteurs de télévision, appareils téléphoniques fixes, appareils domotiques ou électroménagers, etc. Pour toutes ces variantes, la plate-forme hôte 1 est dotée par exemple d'un lecteur de carte à puce additionnelle 3 qui est adapté à la technologie de la carte à puce constituant le dispositif portable 2 et qui est relié à celui-ci à travers une liaison bidirectionnelle 4.

Dans la plate-forme 1 sont implémentées les sept couches protocolaires C1 à C7 du modèle d'interconnexion des systèmes ouverts OSI comme montrée schématiquement à la figure 2. La couche physique basse C1 est reliée physiquement à un réseau de télécommunications RES englobant notamment le réseau internet. La couche réseau C3 comporte le protocole internet IP sans moyens de sécurité. La couche transport C4 comporte par exemple les protocoles TCP et UDP et la dernière couche application C7 comporte plusieurs applications.

Selon l'invention, la plate-forme hôte 1 comporte une couche de dérivation C23 intermédiaire entre la couche liaison de données C2 et la couche réseau C3. Cette couche de dérivation est reliée à des ports spécifiques des couches C2 et C3 de manière à transmettre des paquets entrants PE depuis la couche C2 vers la couche C3 et des paquets sortants PS depuis la couche C3 vers la couche C2 à travers le lecteur 3, la liaison bidirectionnelle 4 et un "filtre de paquets" que constitue le dispositif portable 2. La couche de dérivation C23 aiguille ainsi les paquets entrants PE et sortants PS vers le dispositif portable 2 sans aucune interprétation ni aucun traitement particulier de ces paquets. Comme on le verra dans la suite, seul le dispositif portable 2 décide de retransmettre des paquets entrants prédéterminés PE sous forme de paquets entrants traités PET à la couche réseau C3 et des paquets sortants prédéterminés PS sous forme de paquets sortants traités PST à la couche liaison C2 après avoir analyser et traiter respectivement les paquets PE et PS.

La liaison bidirectionnelle 4 pour échanger des paquets PE, PET et PS, PST entre la plate-forme 1 et le dispositif portable 2 peut être une liaison filaire ou bien une liaison sans fil.

Lorsque la liaison est filaire, celle-ci est par exemple une liaison à huit contacts selon la norme ISO 7816-3 pour cartes à puce, ou bien un bus série universel USB (Universal Serial Bus) de manière à offrir un débit utile relativement élevé avec le réseau RES. Le lecteur 3 est alors adapté pour recevoir au moins partiellement la carte à puce 2 afin de relier électriquement le lecteur et la carte.

Lorsque la liaison 4 est sans fil, celle-ci peut être une liaison radioélectrique de proximité du type Bluetooth qui nécessite aucun contact physique entre le dispositif portable et la plate-forme hôte. Par exemple, il suffit simplement de poser le dispositif portable 2 constituant la carte à puce près de la plate-forme hôte 1, le dispositif portable pouvant être conservé comme un badge dans la poche de l'usager possesseur du dispositif portable. Le lecteur 3 est alors essentiellement une interface radioélectrique Bluetooth qui surveille périodiquement la présence d'un ou plusieurs dispositifs portables 2 également dotés chacun d'une interface radioélectrique Bluetooth et situés à proximité de la plate-forme 1, dans un rayon très court de l'ordre de quelques dizaines de centimètres environ afin d'éviter toute écoute malveillante. Dès que la plate-forme 1 a reconnu le dispositif portable 2 selon un protocole d'établissement de connexion Bluetooth, le dispositif portable 2 gère automatiquement la sécurité du trafic des paquets entre la couche liaison de données C2 et la couche transport C3 dans la plate-forme 1.

A l'inverse, une fois que le dispositif portable sort de la couverture radioélectrique de la plate-forme hôte, la plate-forme hôte est complètement anonyme et en particulier les couches hautes C3 à C7 sont inaccessibles depuis le réseau RES.

Comme montré schématiquement à la figure 2, la carte à puce constituant le dispositif portable 2 contient principalement un microprocesseur 21, une mémoire 22 de type ROM incluant un système d'exploitation OS de la carte et notamment un ou des algorithmes d'authentification d'usager AU, des algorithmes d'authentification AA, de confidentialité AC et de chiffrement ACH pour paquets et un moteur décisionnel de politique de sécurité MPS spécifiques au domaine de sécurité internet IPSec, une mémoire non volatile 23 comme une mémoire EEPROM qui contient toutes les données personnelles DP, y compris des informations d'authentification d'usager-possesseur de la carte et des moyens AU pour authentifier l'usager-possesseur avec les informations précédentes, liées à l'usager-possesseur de la carte 2 ainsi qu'au fournisseur de la carte et des tables de politiques et de paramètres de sécurité TP et TPS, et une mémoire 24 de type RAM destinée à échanger des données avec la plate-forme hôte 1 à travers la liaison 4. La mémoire RAM 24 peut être incluse dans une interface de communication 25 notamment pour connecter le dispositif portable 2 à la plate-forme hôte 1 à travers la liaison radioélectrique de proximité 4 du type Bluetooth. Tous les composants 21 à 25 sont reliés par un bus interne 26.

De préférence, de manière à offrir une vitesse d'exécution très élevée, les algorithmes cryptographiques ACH, AA et AC, et le moteur MPS sont des algorithmes dits "câblés", par exemple écrits en langage VHDL (Very High Description Language) ou en un langage similaire VERILOG et chargés dans un composant CPLD (Complex Programmable Logic Device) ou FPGA (Field-Programmable Gate Array), et sont ainsi réalisés non pas en logiciel mais en matériel sous forme de logique séquentielle et combinatoire.

Préalablement, avant tout accès aux moyens de sécurité ACH, AA, AC, MPS traitant les paquets et implémentés dans le dispositif portable 2, le dispositif portable qui a implémenté une partie du protocole IP, est adressé par une adresse IP allouée statistiquement ou dynamiquement, transmise par la plate-forme hôte 1 à travers la liaison 4 dès que le lecteur 3 dans celle-ci a détecté la présence du dispositif dans ou à proximité de celui-ci afin de déclencher une authentification d'usager.

Les moyens d'authentification AU de l'usager-possesseur de la carte intégrés au dispositif portable 2 font appel à des techniques de reconnaissance biométrique, notamment lecture d'empreintes de doigts ou reconnaissance vocale, analyse et comparaison avec les données mémorisées dans la mémoire 23 avec celles lues. Ainsi aucune donnée sensible personnelle liée à cette authentification de l'usager ne sort à aucun moment du dispositif 2. Cependant, en variante, des moyens traditionnels tels que code d'identification personnel PIN sont mis en oeuvre, mais la sécurité est alors diminuée, ou plus simplement, l'authentification d'usager n'est pas prévue.

Après que les moyens d'authentification AU aient authentifié l'usager autorisé à se servir du dispositif électronique portable 2, le dispositif 2 poursuit la procédure de sécurisation au moyen notamment des algorithmes d'authentification AA et de confidentialité AC et du moteur de politique de sécurité MPS.

L'authentification de l'usager permet à l'usager ainsi qu'à l'administrateur des dispositifs électroniques portables d'accéder aux et de générer manuellement ou automatiquement notamment les données personnelles DP et les paramètres PDP et PPS liés à l'usager.

Les moyens de sécurité internet IPSec ne sont implémentés que partiellement dans le dispositif portable 2 qui ne comporte pas en interne le logiciel qui gère la négociation des politiques de sécurité ni des paramètres associés à celles-ci. La gestion de politiques de sécurité et particulièrement des clés liées à ces politiques est déléguée à un ou plusieurs serveurs de gestion SG distants de la plate-forme 1. Dès que le dispositif portable est connecté à la plate-forme hôte 1 et a authentifié l'usager, il est connecté au réseau global RES pour ses propres besoins. Comme on le verra ci-après, chaque fois que le dispositif portable 2 a besoin de négocier des politiques de sécurité ou des paramètres liés à celles-ci, il se connecté automatiquement de manière sécurisée au serveur de gestion SG à travers la plate-forme hôte 1 et le réseau RES. Le serveur de gestion est situé dans une enceinte physique sécurisée et est géré par exemple par la société distribuant et administrant les dispositifs portables. Le serveur de gestion distant traite alors la requête de paramètres du dispositif portable et lui transfert les paramètres d'une politique de sécurité nécessaires pour poursuivre la sécurisation du trafic de paquets entrants et sortants PE et PS relatifs à cette politique dans la plate-forme hôte 1.

A cette fin, le dispositif portable 2 comprend les tables de politiques et de paramètres de sécurité TP et TPS, le moteur de politique de sécurité MPS, les algorithmes de chiffrement ACH, d'authentification AA et de confidentialité AC, et un module MCS inclus dans l'interface de communication 25 et servant à connecter le dispositif portable 2 au serveur de gestion SG.

Dans la mémoire EEPROM 23, la table de politique de sécurité TP, relativement, similaire à la table "Security Policy Database" du domaine IPSec, fait correspondre des politiques de sécurité POS respectivement à des paramètres de désignation de politique PDP qui sont détectés dans des paquets entrants et sortants PE et PS. Par exemple, un paramètre de désignation de politique de sécurité PDP dépend d'au moins l'un des paramètres suivants inclus dans un paquet PE, PS : une adresse IP de destinataire dans un paquet sortant PS ou de source dans un paquet entrant PE, ou au moins une partie de cette adresse, et/ou la direction entrante ou sortante du paquet, et/ou le type du protocole de transport, et/ou un numéro de port servant de numéro de référence de communication ou de session, etc.

Egalement dans la mémoire 23 est incluse la table de paramètres de politique de sécurité TPS, relativement similaire à la table "Security Association DataBase" du domaine IPSec, qui associe des paramètres de politique de sécurité PPS respectivement aux politiques de sécurité POS répertoriées dans la table TP. Une politique de sécurité donnée POS peut être associée à au moins l'un des paramètres suivants PPS : type d'algorithme de chiffrement ACH, clé de chiffrement ou d'authentification ou de confidentialité, durée de vie de clé, type d'algorithme d'authentification AA, type d'algorithme de confidentialité AC, etc., qui sont à utiliser pour appliquer la politique de sécurité.

Il est rappelé qu'un paquet selon le protocole IPSec peut comprendre un en-tête d'authentification AH (Authentication Header) et un en-tête de confidentialité ESP (Encapsulated Security Payload). L'en-tête d'authentification AH ou de confidentialité ESP comprend notamment un indice de paramètre de sécurité SPI (Security Parameter Index) et des données d'identification. L'indice SPI et/ou l'adresse de destination IP et/ou le type d'en-tête AH ou ESP en tant que paramètres de désignation de politique PDP dans la table TP contribuent à désigner une politique de sécurité chez le destinataire du paquet, tel que la plate-forme hôte 1 pour un paquet entrant PE, c'est-à-dire une politique de sécurité POS associée à des paramètres de sécurité PPS dans la table TPS.

Les données d'authentification sont destinées à authentifier la source du paquet et à assurer l'intégrité de celui-ci. L'un des algorithmes d'authentification AA sélectionné par la politique associée POS est appliqué sur l'en-tête d'authentification AH pour non-répudier la source du paquet, c'est-à-dire authentifié le paquet comme ayant été émis par la source.

L'en-tête de confidentialité ESP comprend un champ de données qui sont à protéger en assurant leurs confidentialité et intégrité par l'un des algorithmes de confidentialité AC repéré dans la table TPS en association avec la politique de sécurité POS désignée par au moins l'indice SPI et/ou l'adresse de destination IP.

Un paquet traité PST sortant du dispositif 2 ou un paquet entrant PE à traiter dans le dispositif 2 peut comprendre l'un des en-têtes AH et ESP, ou bien les deux, l'en-tête de confidentialité ESP encapsulant alors- le paquet- avec l'en-tête d'authentification AH.

Initialement, avant la première mise en service du dispositif électronique portable 2 par l'usager, l'administrateur précharge dans la mémoire 23 du dispositif portable quelques politiques de sécurité POS en association avec un ou des paramètres de désignation de politique respectifs PDP dans la table TP et des paramètres de politique PPS dans la table TPS, afin de permettre au dispositif portable d'initier des communications avec des serveurs de gestion distants et de décider de lui-même l'évolution des politiques et des paramètres associés.

Par exemple, lorsque la couche réseau C3 dans la plate-forme hôte 1 transmet un paquet sortant IP PS au dispositif portable 2 via la liaison 4, au début d'une session avec une autre plate-forme, tel qu'un terminal éloigné TE, le moteur décisionnel MPS détecte le ou les paramètres de désignation de politique PDP dans le paquet PS et recherche une politique de sécurité dans la table TP correspondant aux paramètres lus PDP. Si le moteur trouve une politique POS, il applique cette politique au paquet PS en fonction des paramètres de celle-ci lus dans la table TPS. Le paquet PS est alors filtré et traité par le moteur MPS pour le transmettre sous la forme d'un paquet sortant PST, sans changement, ou avec ses données chiffrées, et/ou encapsulé avec un en-tête AH et/ou en en-tête ESP, par exemple.

Le moteur MPS peut également écarté tout paquet sortant PS dont des paramètres PDP désignent une politique de rejet de paquet sortant.

Une fois qu'une politique POS est associée au paquet sortant PS, tous les paquets sortants PS et PE de la session en cours sont traités selon cette politique. En particulier, les paquets entrants PE transmis par le terminal éloigné TE à travers le réseau RES au dispositif portable 2 via la couche liaison de données C2 dans la plate-forme 1 et la liaison 4 sont filtrés et traités par le moteur MPS pour effectuer des opérations inverses à celles effectuées sur les paquets sortants. Le moteur MPS transmet des paquets entrants traités PET à la couche réseau C3, par exemple sans changement, ou avec des données déchiffrées, et/ou désencapsulés d'un en-tête AH et/ou d'un en-tête ESP, comparativement aux paquets PE.

Selon une autre possibilité, au début de la session, en réponse à un paquet donné sortant PS transmis par la couche réseau 3 vers le terminal éloigné TE, ou entrant PE transmis par le terminal éloigné TE via la couche C2, le moteur de politique de sécurité MPS ne reconnaît dans la table TP aucune politique de sécurité en correspondance avec des paramètres de désignation de politique PDP détectés dans le paquet donné PS. Le moteur initie alors une communication avec le serveur de gestion SG via le module de connexion MCS et le réseau RES en lisant l'adresse IP du serveur SG contenue dans la mémoire 23. Après une authentification mutuelle du dispositif 2 et du serveur SG, la communication est chiffrée en incluant des paramètres lus dans la table TPS et soit associés à une politique de sécurité de communication notamment avec le serveur SG, soit associés à une politique de sécurité propriétaire uniquement entre le dispositif 2 et le serveur SG.

Le dispositif portable 2 transmet au moins un paquet de protocole de négociation PRN au serveur distant SG qui transmet ensuite un paquet de réponse préformaté REP au dispositif 2. Le paquet de réponse REP est ré-émis par le dispositif 2 vers le terminal éloigné TE avec lequel le dispositif est en communication et négociation. Tant que le dispositif 2 n'a pas reçu un paquet de politique déterminée POL, le dispositif maintient périodiquement un cycle de transmission d'un paquet de protocole de négociation de politique PRN vers le serveur SG et de ré-émission d'un paquet de réponse REP vers le terminal TE.

Pendant ces cycles, le serveur SG aide le dispositif portable dans la négociation d'une politique de sécurité, c'est-à-dire définit les paramètres PPS dont dépend une politique de sécurité POS par exemple en fonction de renseignements sur le terminal TE désigné par son adresse contenue dans le paquet de protocole de négociation PRN comparativement aux données personnelles d'usager DP et éventuellement aux autres politiques de sécurité relatives au dispositif 2. Finalement le serveur SG transmet au dispositif 2 au moins un paquet POL contenant la désignation de la politique de sécurité POS à appliquer aux paquets échangés entre le terminal TE et le dispositif 2, les paramètres de désignation PDP de cette politique et les paramètres PPS définissant cette politique. Les paramètres PDP et PPS de la politique élaborée POL sont immédiatement mémorisés dans les tables TP et TPS de la mémoire 23 en réponse au paquet POL détecté dans le module de connexion MCS. Le moteur MPS arrête alors les ré-émissions des paquets de protocole de négociation PRN et de réponse REP, et utilise les paramètres PPS de la politique venant d'être négociée et mémorisée pour sécuriser au moins les paquets sortants PS et dé-sécuriser les paquets entrants PE échangés avec le terminal TE.

Selon une autre possibilité, des étapes de négociation entre le serveur SG et le dispositif 2 analogues à celles décrites ci-dessus sont initiées par le moteur décisionnel MPS lorsque celui-ci constate qu'au moins l'un des paramètres PPS, tels que clés, dont dépend la politique de sécurité pour les échanges avec le terminal 2 doit être changé parce que le paramètre est en fin de vie, ou bien parce que la session excède une durée prédéterminée, ou parce qu'un silence succédant à un paquet transmis par le terminal TE, sans être suivi par un paquet PE ou PS, excède une durée prédéterminée. Dans ce cas, dès que le terminal TE se manifeste à nouveau auprès du dispositif 2, celui-ci renégocie une politique de sécurité, c'est-à-dire au moins un paramètre de politique PPS.

Le dispositif portable 2 délègue ainsi dynamiquement la création de politique et la gestion de paramètres de politique, tels que clés, au serveur de gestion SG, cette délégation étant transparente pour le terminal distant TE.

Il ressort de la description précédente du système de sécurité selon l'invention les avantages principaux suivants.

Le dispositif électronique portable 2 implémente lui-même partiellement les moyens de sécurité IPSec représentés principalement par les algorithmes ACH, AA et AC, les tables TP et TPS et le moteur décisionnel de politique de sécurité MPS. La vérification préalable de l'identité de l'usager au moyen d'une comparaison entre des informations d'authentification biométriques obtenues par une acquisition ou des données que seul l'usager-possesseur connaît, par exemple le code PIN, et des données de références contenues dans la mémoire EEPROM 23 du dispositif portable, et l'association de politiques de sécurité spécifiques POS aux informations d'authentification dans le dispositif électronique portable 2 réalisent le lien avec l'usager. La perte de tous liens entre l'usager et la plate-forme n'est plus possible comparativement à la technique antérieure selon laquelle la couche réseau C3 intègre les moyens de sécurité.

Le dispositif électronique portable 2 possède dans la table TPS tous les paramètres de sécurité PPS pour un usager particulier. Le dispositif portable peut donc être retiré d'une plate-forme pour être ensuite accueilli par une autre plate-forme selon l'invention. Les moyens de sécurité amovibles selon l'invention sont donc portables d'une plate-forme à une autre, comparativement à la technique antérieure selon laquelle un noeud de réseau particulier représenté par la plate-forme hôte devait être dédié à l'usager, puisque les moyens de sécurité résidaient dans la couche réseau de la plate-forme.

Les moyens de sécurité contenus dans le dispositif portable 2 sont avantageusement insérables au niveau de la couche de dérivation C23 intermédiaire entre les couches liaison C2 et réseau C3, de n'importe quelle plate-forme ne possédant pas de moyens de sécurité. La mise en relation du dispositif portable avec cette plate-forme ne modifie pas la suite des protocoles dans les couches, le système d'exploitation et toutes les applications hébergées dans la plate-forme. Tous les logiciels situés dans les couches supérieures à la couche réseau C3 bénéficient des moyens de sécurité implémentés dans le dispositif portable.

L'invention remédie également à la complexité du déploiement de l'infrastructure à clés publiques selon la technique antérieure. En effet, le dispositif électronique portable 2 est conçu suivant des principes de fabrication, d'initialisation et de distribution comme ceux connus des cartes à puce, et chaque dispositif portable étant lié à au moins un usager autorisé a ses moyens de sécurité personnalisés avant la première mise en service du dispositif portable par l'usager. La délégation de la gestion des politiques de sécurité et notamment des clés publiques à au moins un serveur de gestion distant alliée aux avantages de la personnalisation du dispositif portable facilite le déploiement de l'infrastructure à clés publiques.

Comparativement aux applications de sécurité implémentées dans la couche application des cartes à puce connues, le dispositif électronique portable 2 de l'invention implémente au moins partiellement les moyens de sécurité sans que la sécurité repose sur la plate-forme hôte à laquelle le dispositif portable est connecté pendant les phases décisionnelles et de sécurisation de données. En effet, le dispositif 2 choisit lui-même au moyen du moteur MPS les politiques de sécurité POS et donc les paramètres de sécurité PPS, tels que les clés et algorithmes cryptographiques associés, sélectionne lui-même les paquets traités PET, PST à retransmettre en fonction des politiques choisies, et effectue lui-même par l'intermédiaire des algorithmes AA, AC et ACH les phases d'authentification, confidentialité et chiffrement (déchiffrement) des paquets PE et PS. Les clés et plus généralement les paramètres de sécurité PPS ne sont ni confiés, ni présents sur la plate-forme hôte 1 à aucun moment.

Une fois que le dispositif portable 2 est éloigné de la plate-forme 1, c'est-à-dire est déconnecté physiquement ou est situé hors de la couverture radioélectrique de la plate-forme, aucune communication relative à l'usager du dispositif portable ne peut perdurer ; en particulier des voies de communication réservées à un réseau virtuel privé VPN auquel a accès l'usager ne peuvent être utilisées ultérieurement, la plate-forme 1 devenant anonyme. L'invention améliore ainsi la sécurité de l'utilisation des clés.

L'invention remédie également à l'inconvénient des applications à base de cartes à puce qui étaient portables et diffusables de manière générique vers d'autres applications ou protocoles, dont le nombre était limité à cause de l'implémentation des moyens de sécurité dans des applications particulières le plus souvent propriétaires. Au contraire, l'implémentation des moyens de sécurité amovibles juste en-dessous de la couche réseau C3 dans la plate-forme hôte selon l'invention permet la sécurisation de manière transparente de protocoles ou d'applications installées dans la plate-forme hôte sans modification particulière de ces protocoles ou applications.

## Revendications

1. - Dispositif électronique portable (2) connecté de manière amovible à une plate-forme hôte (1) liée à un réseau de paquets (RES), **caractérisé en ce qu'**il comprend un moyen (TPS) pour mémoriser des politiques de sécurité (POS), un moyen (MPS, TP) pour détecter des paramètres de désignation de politique de sécurité (PDP) dans des paquets (PS) sortant de la plate-forme vers le réseau et des paquets (PE) transmis par le réseau et entrant dans la plate-forme, et un moyen (MPS, ACH, AA, AC) pour traiter les paquets sortants et entrants (PS, PE) respectivement en fonction de politiques de sécurité désignées par les paramètres de désignation détectés.

2. - Dispositif conforme à la revendication 1, dans lequel le moyen pour traiter comprend un moyen pour chiffrer (ACH) et/ou encapsuler (AA, AC) avec un en-tête d'authentification (AH) et/ou un en-tête de confidentialité (ESP) un paquet sortant (PS) en fonction de la politique de sécurité désignée par au moins un paramètre de désignation inclus dans le paquet sortant, et/ou un moyen pour déchiffrer (AC) et/ou désencapsuler (AA, AC) relativement à un en-tête d'authentification (AH) et/ou un en-tête de confidentialité (ESP) un paquet entrant (PE) en fonction de la politique de sécurité désignée par au moins un paramètre de désignation inclus dans le paquet entrant.

3. - Dispositif conforme à la revendication 1 ou 2, dans lequel un paramètre de désignation de politique de sécurité (PDP) en mémoire (23) dans le dispositif dépend d'au moins l'un des paramètres suivants inclus dans un paquet (PS, PE) : au moins une partie d'adresse de destinataire ou de source, direction du paquet, type de protocole de transport, numéro de référence de communication ou de session, identificateur dans un en-tête d'authentification ou de confidentialité du paquet.

4. - Dispositif conforme à l'une quelconque des revendications 1 à 3, dans lequel une politique de sécurité (POS) est associée à au moins l'un des paramètres de politique de sécurité suivants (PPS) en mémoire (23) dans le dispositif : type de chiffrement (ACH), clés, durée de vie de paramètre, type d'authentification (AA), type de confidentialité (AC), durée de session, silence entre paquets.

5. - Dispositif conforme à l'une quelconque des revendications 1 à 4, **caractérisé en ce qu'**il comprend un moyen (MPS, MCS) pour initier une communication avec un serveur de gestion de politique de sécurité (SG) à travers le réseau (RES) lorsque le moyen pour traiter (MPS, TP) ne reconnaît aucune politique de sécurité en correspondance avec les paramètres de désignation de politique (PDP) détectés dans un paquet (PS, PE) afin que le serveur (SG) négocie une politique de sécurité à travers le dispositif et transmette au dispositif (2) au moins un paquet (POL) contenant des paramètres de désignation (PDP) et des paramètres (PPS) dont dépend la politique négociée et qui sont mémorisés et utilisés dans le dispositif (2) pour traiter des paquets (PS, PE) relatifs à la politique négociée.

6. - Dispositif conforme à la revendication 5, dans lequel le moyen pour initier (MPS, MCS) initie une communication avec le serveur de gestion (SG) lorsqu'au moins l'un des paramètres (PPS) dont dépend une politique de sécurité (POS) doit être changé.

7. - Dispositif conforme à la revendication 5 ou 6, dans lequel un cycle de transmission d'un paquet de négociation de politique (PRN) depuis le dispositif (2) vers le serveur (SG), de transmission d'un paquet de réponse (REP) depuis le serveur vers le dispositif et de ré-émission du paquet de réponse depuis le dispositif vers une plate-forme (TE) avec laquelle le dispositif est en communication, est maintenu tant que le serveur (SG) élabore la politique de sécurité.

8. - Dispositif conforme à l'une quelconque des revendications 1 à 7, comprenant des moyens (AU) pour authentifier un usager préalablement à un traitement de paquets.

9. - Dispositif conforme à l'une quelconque des revendications 1 à 8, comprenant un moyen (25) pour connecter le dispositif (2) à la plate-forme hôte (1) à travers une liaison radioélectrique de proximité (4).

## Claims

1. A transferable electronic device (2) removably connected to a host platform (1) linked to a packet network (RES), **characterized in that** it includes means (TPS) for storing security policies (POS), means (MPS, TP) for detecting security policy designation parameters (PDP) in packets (PS) going out of the platform towards the network and packets (PE) transmitted by the network and coming into the platform, and means (MPS, ACH, AA, AC) for processing the outgoing and incoming packets (PS, PE) respectively according to the security policy designated by the detected designation parameters.

2. A device according to claim 1, wherein the processing means includes means for ciphering (ACH) and/or encapsulating (AA, AC), with an authentication header (AH) and/or an encapsulated security payload (ESP), an outgoing packet (PS) according to the security policy designated by at least one designation parameter included in the outgoing packet, and/or means for deciphering (AC) and/or dis-encapsulating (AA, AC), with respect to an authentication header (AH) and/or an encapsulated security payload (ESP), an incoming packet (PE) according to a security policy designated by at least one designation parameter included in the incoming packet.

3. A device according to claim 1 or 2, wherein a safety policy designation parameter (PDP) in the memory (23) of the device depends on at least one of the following parameters included in one packet (PS, PE): at least a part of the address of the recipient or of the source, the direction of the packet, the type of the transportation protocol, the communication or session reference number, the identifier in an authentication header or an encapsulated security payload of the packet.

4. A device according to any one of claims 1 to 3, wherein a security policy (POS) is associated with at least one of the following security policy parameters (PPS) in the memory (23) in the device: ciphering type (ACH), duration of parameter, type of authentication (AA), type of privacy (AC), session lifetime, silence between packets.

5. A device according to any one of claims 1 to 4, **characterized in that** it includes means (MPS, MCS) for initiating a communication with the security policy management server (SG) through the network (RES), when the means for processing (MPS, TP) identifies no security policy corresponding to the policy designation parameters (PDP) detected in a packet (PS, PE), so that the server (SG) negotiates a security policy through the device and transmits to the device (2) at least one packet (POL) containing designation parameters (PDP) and parameters (PPS) which the negotiated policy depends on, and which are stored and used in the device (2) for processing packets (PS, PE) relating to the negotiated policy.

6. A device according to claim 5, wherein the initiating means (MPS, MCS) initiate a communication with the management server (SG) when at least one of the parameters (PPS) which the security policy (POS) depends on, must be changed.

7. A device according claim 5 or 6, wherein a cycle of transmission of the policy negotiation packets (PRN) from the device (2) to the server (SG), a transmission of a response packet (REP) from the server to the device and a re-transmission of the response packet from the device to a platform (TE) which the device is communicating with, is maintained as long as the server (SG) elaborates the security policy.

8. A device according to any one of claims 1 to 7, comprising means (AU) for authenticating a user prior to the processing of a packet.

9. A device according to any one of claims 1 to 8, comprising means (25) for connecting the device (2) to the host platform (1) through a proximity radio-electric link (4).

## Patentansprüche

1. - Vorrichtung (2), die abnehmbar an eine Host-Plattform (1) angeschlossen ist, die mit einem Paketnetz (RES) verbunden ist, **dadurch gekennzeichnet, daß** sie ein Mittel (TPS) zum Speichern der Sicherheitspolitiken (POS) umfaßt, ein Mittel (MPS, TP) zum Entdecken der Parameter zur Bezeichnung von Sicherheitspolitik in Paketen (PS), die aus der Plattform zum Netz ausgehen, und Pakete (PE), die vom Netz übermittelt werden und in die Plattform eingehen, und ein Mittel (MPS, ACH, AA, AC) für die Verarbeitung der ausgehenden beziehungsweise eingehenden Pakete (PS, PE) je nach den Sicherheitspolitiken, die von den entdeckten Bezeichnungsparametern bezeichnet werden.

2. - Vorrichtung nach Anspruch 1, **dadurch gekennzeichnet, daß** das Mittel für die Verarbeitung ein Mittel für die Verschlüsselung (ACH) und/oder zum Verkapseln (AA, AC) mit einer Kopfzeile für die Authentifizierung (AH) und/oder eine Kopfzeile für die Vertraulichkeit (ESP) eines ausgehenden Pakets (PS) je nach der Sicherheitspolitik umfaßt, die von mindestens einem Bezeichnungsparameter bezeichnet wird, der im ausgehenden Paket eingeschlossen ist, und/oder ein Mittel zum Entschlüsseln (AC) und/oder Entkapseln (AA, AC) bezüglich einer Kopfzeile zur Authentifizierung (AH) und/oder eine Kopfzeile für die Vertraulichkeit (ESP) eines eingehenden Pakets (PS) je nach der Sicherheitspolitik, die von mindestens einem Bezeichnungsparameter bezeichnet wird.

3. - Vorrichtung nach Anspruch 1 oder 2, **dadurch gekennzeichnet, daß** ein Bezeichnungsparameter der Sicherheitspolitik (PDP) im Speicher (23) in der Vorrichtung von mindestens einem der folgenden in einem Paket (PS, PE) eingeschlossenen Parameter abhängt: Mindestens ein Teil mit der Empfänger- oder Ursprungsadresse, Richtung des Pakets, Art des Transportprotokolls, Referenznummer der Verbindung oder der Sitzung, Identifikator in einer Kopfzeile zur Authentifizierung oder der Vertraulichkeit des Pakets.

4. - Vorrichtung nach einem beliebigen der vorstehenden Ansprüche 1 bis 3, **dadurch gekennzeichnet, daß** eine Sicherheitspolitik (POS) mit mindestens einem der nachstehenden Parameter einer Sicherheitspolitik (PPS) im Speicher (23) in der Vorrichtung verbunden ist: Art der Verschlüsselung (ACH), Schlüssel, Lebensdauer des Parameters, Art der Authentifizierung (AA), Art der Vertraulichkeit (AC), Dauer der Sitzung, Ruhedauer zwischen den Paketen.

5. - Vorrichtung nach einem beliebigen der vorstehenden Ansprüche 1 bis 4, **dadurch gekennzeichnet, daß** sie ein Mittel (MPS, MCS) zum Initiieren einer Verbindung mit einem Management-Server der Sicherheitspolitik (SG) durch das Netz (RES) umfaßt, wenn das Mittel für die Verarbeitung (MPS, TP) keine Sicherheitspolitik erkennt, die den Parametern zur Bezeichnung der Politik (PDP) entspricht, die in einem Paket (PS, PE) entdeckt werden, damit der Server (SG) eine Sicherheitspolitik durch die Vorrichtung verhandelt und mindestens ein Paket (POL) an die Vorrichtung (2) übermittelt, das Bezeichnungsparameter (PDP) und Parameter (PPS) enthält, von denen die verhandelte Politik abhängt, und die in der Vorrichtung (2) gespeichert sind und benutzt werden, um Pakete (PS, PE) bezüglich der verhandelten Politik zu verarbeiten.

6. - Vorrichtung nach Anspruch 5, **dadurch gekennzeichnet, daß** das Mittel zum Initiieren (MPS, MCS) eine Verbindung mit dem Management-Server (SG) initiiert, wenn mindestens einer der Parameter (PPS), von dem eine Sicherheitspolitik (POS) abhängt, geändert werden muß.

7. - Vorrichtung nach Anspruch 5 oder 6, **dadurch gekennzeichnet, daß** ein Zyklus zur Übermittlung eines Pakets zur Verhandlung der Politik (PRN) von der Vorrichtung (2) zum Server (SG), zur Übermittlung eines Antwortpakets (REP) vom Server zur Vorrichtung und der Weiterübermittlung des Antwortpakets ab der Vorrichtung zu einer Plattform (TE), mit der die Vorrichtung in Verbindung steht, aufrecht erhalten wird, solange der Server (SG) die Sicherheitspolitik erarbeitet.

8. - Vorrichtung nach einem beliebigen der vorstehenden Ansprüche 1 bis 7, **dadurch gekennzeichnet, daß** sie Mittel (AU) zur Authentifizierung eines Benutzers vor einer Verarbeitung von Paketen umfaßt.

9. - Vorrichtung nach einem beliebigen der vorstehenden Ansprüche 1 bis 8, **dadurch gekennzeichnet, daß** sie ein Mittel (25) für den Anschluß der Vorrichtung (2) an die Host-Plattform (1) durch eine funkelektrische Verbindung im Nahbereich (4) umfaßt.
